# DEMANDE DE BREVET EUROPEEN

(11) **EP 2 301 747 A1**
(43) Date de publication de la demande: **30.03.2011**
(21) Numéro de dépôt: 09011783.9
(22) Date de dépôt: 16.09.2009
(51) Int. Cl.: B32B 17/10, E04D 3/28, E06B 3/54, E06B 3/62

(54) **Rend fort verre**

(71) Demandeur: Sunglass Design, 1528 Luxembourg (LU)
(72) Inventeur: Chinzi, Calogero, B-7100 La Louvière (FR)
(74) Mandataire: Wingerter de Santeul, Marie Béatrice

(57) **Abrégé**

L'invention se rapporte a un vitrage simple, feuilleté ou en vitrage double où au moins un de ses composants, dont une des faces est plus fragile, est contraint de manière orientée afin d'améliorer ses performances mécaniques et les performances mécaniques globales du complexe. Grâce à cette invention, l'assemblage obtenu est plus résistant pour une épaisseur moindre.

La présente invention se rapporte a des vitrages simples ou multiples en particulier à des vitrages multiples, par exemple, comprenant deux feuilles de matière vitreuse disposées en relation face à face dont une ou les deux sont précontraintes par leur assemblage l'une sur l'autre.

L'invention décrit également les améliorations liées directement au procédé mais également une originalité concernant les assemblages de matériaux à coefficient de dilatation différente à l'aide d'un insert d'un matériau de coefficient de dilatation intermédiaire et une amélioration des performances des vitrages résistant au feu considérable.

## Description

L'assemblage des vitrages en verre feuilleté est couramment utilisé afin de conférer un aspect sécuritaire au verre en cas de rupture. Cette technique rigidifie également les composants l'un par rapport à l'autre mais sans atteindre la raideur conférée par un vitrage d'épaisseur globale identique.

Cette technique est également utilisée pour mettre en forme courbe des vitrages plans. Cette technique, généralement utilisée par des transformateurs ne maîtrisant pas le « cintrage à chaud par fusion du verre, plus précisément réchauffement jusqu'au point de Transition vitreuse - formage - refroidissement », possède les limites suivantes :
- Les épaisseurs de verre doivent être limitées afin de réduire les contraintes de longue durée dans les composants.
- Les vitrages doivent être maintenus sur des systèmes rigides et compatibles notamment en termes de coefficient de dilatation. Cette restriction limite le choix et la compatibilité des cadres avec les utilisations éventuellement spécifiques.
- Les vitrages ainsi fabriqués doivent être maintenus mécaniquement sous peine de transmettre des efforts mécaniques statiques aux matériaux organiques utilisés pour cet assemblage :
   ○ Intercalaire de type Polyvinyle butyral par exemple.
   ○ Autres matières thermoplastiques.
- La grande limite de cette application est l'obligation de « sur-former » le vitrage à un niveau supérieur que le niveau désiré lors de sa fabrication. Ceci se traduit par une charge statique permanente dans l'intercalaire thermoplastique organique, ce qui est connu comme néfaste pour les performances à long terme.
- Le retour élastique décrit dans d'autres applications et copies de ce principe, génère une partie plane au centre du vitrage, dénommée effet selle de cheval, par fluage sous cette charge statique.
- Le risque, en situation de mouvement de structure ou de charge, que cette selle de cheval ne subisse une inversion de déformation est important. Le panneau verrier n'est pas en position d'équilibre et si la structure engendre un mouvement inverse (tel que provoqué par la tension de câble par exemple), le panneau verrier se brise par un effet Clic-Clac (comme l'unique divertissement que nos pouces connaissaient avant l'ère des jeux vidéo) en terme plus correct, le verre tend à prendre une déformation qui n'est plus développable.

La présente invention permet l'utilisation de composant fragile ou dont plus précisément une des faces est plus fragile, en assemblage feuilleté, tout en optimisant le poids et la résistance du produit final, c'est-à-dire en lui conférant une résistance globale supérieure à épaisseur égale.

Le principe est de mettre en flexion le composant le plus fragile principalement en mettant sous compression la surface à « protéger ». La rupture du verre étant principalement causée par les contraintes de traction, le verre précontraint en traction devra dépasser sa précontrainte de compression avant de subir de la traction.

Par exemple, l'utilisation d'un vitrage avec sérigraphie présente une face plus fragile en raison du stress causé par les deux matériaux durant la fusion de la pâte décorative. Ce phénomène est bien connu et défini dans les normes pour le verre transformé.

Le principe de l'invention est de mettre en flexion le vitrage plan ou courbe, plus précisément en imposant une compression sur sa face fragile.

Le vitrage, ainsi contraint, est assemblé sur un support courbe ou plan, de référence ou de base, à l'aide d'un matériau thermoplastique ou autre. Le support plan ou courbe maintient la géométrie du verre dans sa position. La compression de sa face fragile est maintenue et ses propriétés mécaniques sont améliorées.

Un exemple est la réalisation de panneaux vitrés feuilletés à l'aide d'un vitrage plan ou courbe de base et d'un vitrage plan ou courbe dont une des faces est sérigraphiée.

Le vitrage le plus fragile présente une différence de géométrie contrôlée qui impose une compression sur sa face fragile lors de l'assemblage sur le vitrage plan ou courbe de base.

Un intercalaire thermoplastique spécifique de type polyvinyl butyral ou Sentry Glass Plus ou autre est utilisé.

Le principe de mise en oeuvre sous vide se prête parfaitement à cette invention. Le complexe est emballé dans un sac étanche et le vide est créé dans ce sac. Les deux composants se conforment l'un sur l'autre de façon uniforme sans effort ponctuel. Le système est maintenu tel quel durant le cycle de collage à haute température et de pression nécessaire à l'assemblage des intercalaires envisagés.

La grande particularité est que la contrainte statique dans les intercalaires est très faible, puisque le cycle de cintrage est réalisé sur la forme définitive et non sur un sur cintrage afin de garantir la géométrie souhaitée lors d'un retour élastique.

Cette technique permet de garantir une contrainte statique limitée au retour élastique du seul composant contraint et une parfaite autostabilité géométrique.

L'invention est améliorée si le composant le plus fragile est d'épaisseur plus fine que le composant de base plus épais. Dans cette configuration, la contrainte statique dans l'intercalaire organique est réduite significativement. L'assemblage final devient également plus performant pour un poids réduit dans la mesure où la charge de service (par exemple le vent) est répartie principalement sur le composant le plus épais et le moins fragile.

La mise en flexion d'un complexe de composants d'épaisseurs différentes permet également de déplacer l'axe neutre vers l'endroit désiré.

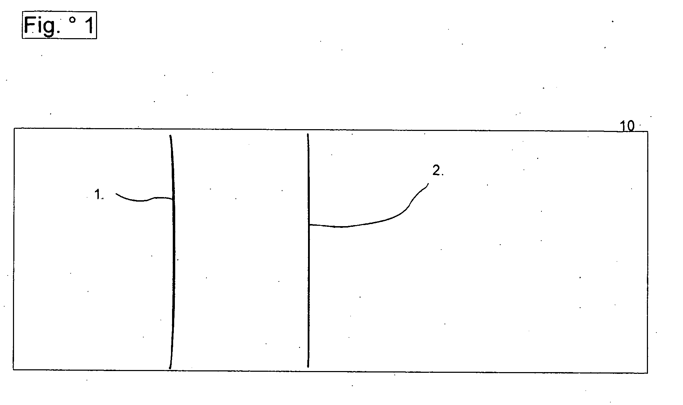

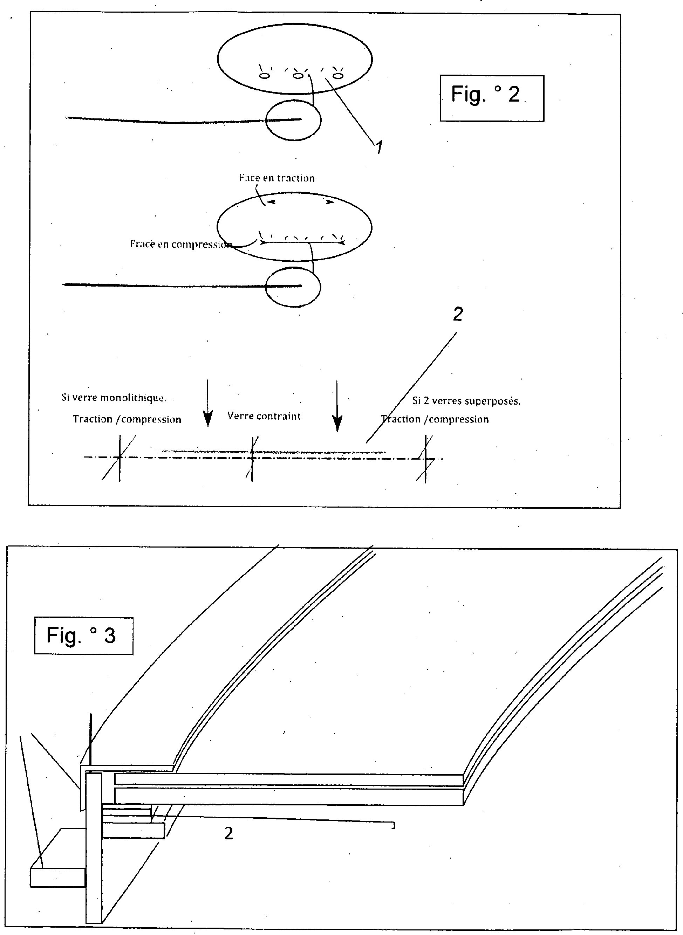

Dans l'exemple fig.2, il est indiscutable que la fibre neutre du complexe se trouve dans l'épaisseur du composant le plus épais.

La face du composant le plus fragile se situe dans une zone de compression.

Grâce à l'invention, sur verre courbe, ce phénomène est continuellement amorcé et la face 2 sera continuellement sous compression ou sous traction réduite, que l'effort soit positif ou négatif (pression ou dépression).

Cet effet est optimisé en adaptant la cohésion de l'intercalaire lors de l'assemblage sur la face fragile d'un verre sérigraphié.

Cette technique peut être encore améliorée si un cadre support est disposé en plan de référence ou de soutient des vitrages.

Celui-ci peut se positionner sur les vitrages durant leur assemblage et être également conditionné dans le sac sous vide. Durant la mise sous vide, le complexe total se conforme à la géométrie définitive souhaitée.

Le cadre support peut également être collé avec un matériau thermoplastique adapté sur les vitrages durant cette opération afin de rigidifier le système et éviter le retour élastique éventuel partiel du complexe. Un collage, polymérisable successif est également possible dans les configurations extrêmes.

Une des difficultés de ce type d'optimisation est de garantir la compatibilité des systèmes significativement différents verre/acier/polymère.

Par exemple, si le cadre support est supposé être considéré comme définitif et solidaire jusqu'à la destination finale du complexe, il devrait éventuellement être réalisé en un acier inoxydable particulier à haute résistance.

Or, les différences de dilatation entre le verre et certains alliages spécifiques peuvent nécessiter des précautions particulières. Par exemple, à l'aide de matériaux d'assemblage souple, aptes à supporter des déformations dimensionnelles avec peu de transfert de contraintes aux interfaces de collage. Le caractère souple de ce type de matériau peut ne pas être compatible avec les caractéristiques mécaniques globales souhaitées.

Une autre solution consiste à utiliser un matériau plus rigide mais avec une plus grande épaisseur afin de limiter l'angle de déformation formé lors des dilatations différentielles. Ce principe, couramment utilisé, a comme un inconvénient son avantage majeur = la souplesse apparente conférée.

L'invention consiste à utiliser un matériau intermédiaire de dilatation différentielle intermédiaire. Ce matériau peut avoir des propriétés différentes que le support principal qui est plus spécifique à l'utilisation décorative ou structurelle, mais possédera une adhérence et surtout un coefficient de dilatation compatible à une épaisseur de collage inférieure.

Le collage ainsi formé ne sera pas nécessairement plus fin, puisqu'il sera doublé, mais sera beaucoup plus rigide. Les dilatations différentielles des deux matériaux principaux et spécifiques sont toujours présentes mais, grâce au matériel intermédiaire, elles sont divisées et réparties respectivement aux deux épaisseurs de collage calculées indépendamment.

L'assemblage ainsi obtenu est plus performant mécaniquement et plus simple à mettre en oeuvre avec les méthodes décrites.

La technique peut également être utilisée avec un matériau intermédiaire à coefficient de dilatation supérieure afin de rompre le collage à température définie.

Cette dernière description permet la construction de modules verrier précontraints et monoblocs pouvant être utilisés pour des constructions simples ou complexes.

Par exemple, pour la réalisation de surfaces vitrées courbes, voir fig.3, l'invention permet d'assembler des composants fragiles sur des géométries de références rigides, compatibles au collage et aux interfaces de structures. Le tout est assemblé, sous conditions optimales, en atelier, livré et monté sur l'ossature définitive sans modification successive. Comme les blocs d'un igloo, des Clams en référence aux coques. Les modules ainsi réalisés permettent de construire des structures avec des éléments verriers structurels. Les charges sont reprises par les profils de périphérie et les panneaux vitrés centraux rigidifient les profils dans les directions décidées.

L'invention permet également de réduire l'effet des tolérances de fabrication, si elles sont correctement définies et orientées, et de s'en servir pour précontraindre la ou les faces fragiles.

Le produit définitif obtenu est optimisé mécaniquement et esthétiquement et les interfaces sont parfaitement maîtrisées au profit de la qualité de l'ouvrage.

L'invention peut encore être améliorée en disposant aux extrémités des profils de rives des supports à double fonction :
1- Supporter le poids propre du verre.
2- Intégrer un support de cable.

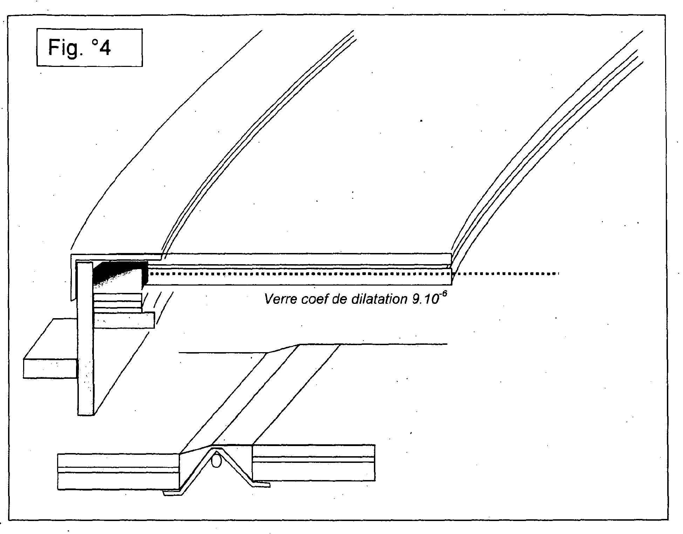

Un cable reliant les deux profils de rives vis-à-vis est tendu entre eux et par les supports à double fonction, voir fig.4.

Ce câble reçoit un support de joint ou un joint préformé. Le joint ou le support possède, par exemple, deux ailes ou tout autre système d'accrochage opposé au câble afin de s'accrocher sur la paroi opposée au panneau vitré.

Dans les supports de câbles, un système de vis réglables, permet de déplacer le support et de mettre le support de joint sous tension ou sous compression, celui-ci peut éventuellement se cambrer afin de suivre le profil d'un verre courbe.

Le dépôt d'un joint d'étanchéité extrudé s'excécute d'un seul côté de la paroi vitrée et les opérations de lissage ou de finitions intérieures sont inutiles. Les deux petites ailes peuvent éventuellement être enlévées après polymérisation du joint extrudé.

Cette invention est réellement avantageuse car elle est plus économique, offre une finition irréprochable et surtout permet de réaliser des joints aux endroits où les décalages entre les deux niveaux des panneaux vitrés sont trop importants pour les joints extrudés classiques. Le haut du profil créé la flexibilité que le joint ne doit plus assurer.

L'invention a un grand intérêt également dans les situations inverses. Par exemple, si un vitrage doit être fragilisé afin de le sacrifier.

Cette particularité est par exemple fort utile pour les applications anti-feu.

Il est connu que les composants verriers résistant au feu souffrent de la mise en vitrage double. Les effets de feux réels ou simulés engendrent une augmentation très importante de la pression dans la lame d'aire qui contraint inutilement les composants résistant au feu.

Dans les applications en vitrage multiple, il est courant d'utiliser des assemblages de composants résistants au feu et de composants standards afin de leur conférer des caractéristiques physiques spécifiques, en vitrage double notamment. L'assemblage est souvent mixte en raison du coût plus important des composants résistants au feu.

Il est constaté par essai suivant la norme BS 476 par exemple, à condition de montage équivalent, le vitrage simple a une intégrité de 30 minutes jusqu'à des dimensions de 2.52*2.52 m, alors que le même composant en vitrage double est limité a 1.69*1.69 m.

Grâce a l'invention, nous pouvons fragiliser le composant externe afin de le sacrifier à des températures supérieures aux conditions d'utilisation mais inférieures aux températures où la fonction feu commence. Le complexe garde ses propriétés physiques dans la gamme de température désignée et sacrifie l'élément péjorant pour sa fonction feu.

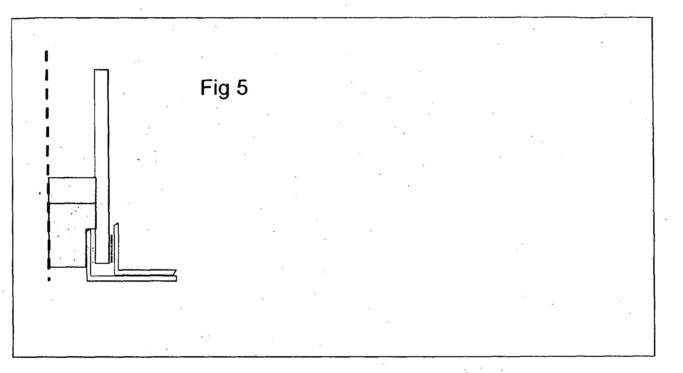

Le système de montage peut également être adapté afin d'optimiser encore le sacrifice et la dynamique de performance ainsi créée. Voir fig.5

La technique expliquée dans la présente invention, si elle est bien maîtrisée, permet également de réaliser des panneaux verriers plan ou courbe de très haute rigidité, au départ de verre courbe cylindrique ou sphérique. Des vitrages multiples sous vide peuvent être réalisés sans plots de distanciations entre les panneaux verriers.

L'inconvénient du verre est principalement sa haute transmission lumineuse qui provoque un effet de serre dans les locaux avec grande surface vitrée. Une technique connue est l'application de couche métallique à transmission solaire plus faible ou sélective, c'est à dire ayant une transmission énergétique inférieure à la transmission lumineuse, ce qui modifie la sélectivité au spectre solaire du panneau vitré.

Une autre technique est d'appliquer une pâte de verre pigmentée par un principe de sérigraphie sur la surface du verre. Si les motifs sont suffisamment petits, la teinte de la pâte de verre ne devient plus significativement visible et la transmission entre les points privilégie la vision au travers de cette paroi. Des petits motifs, non perceptibles, distants plus ou moins afin d'ajuster la transmission solaire. Des résultats significatifs ont été obtenus avec les micro-inserts de 0.25 mm distants de 0.25 mm à 1 mm.

L'invention réside dans l'application de points inférieurs en dimension à 0.8 mm, ce qui est complexe, voire impossible, avec un procédé par sérigraphie et principalement positionné le plus possible à l'opposé de la surface à protéger de la chaleur.

Par exemple, dans une configuration ensoleillée en extérieur, les microobstacles seraient orientés le plus possible vers la surface extérieure du panneau vitré et, si le but est d'augmenter l'apport énergétique, orientés le plus possible vers la face intérieure.

Cette originalité permet d'augmenter encore les surfaces vitrées tout en limitant l'éblouissement (Glare), qui peut survenir en période estivale mais également hivernale, avec un aspect relativement neutre de teinte. Cette technique peut être utilisée de concert avec les autres techniques de protection solaire.

Les micro-inserts sur la surface vitrée pourraient agir comme une multitude de points fragiles et l'invention permet une application optimale du complexe.

Les micro-inserts peuvent également être déposés sur la pâte de verre en fusion après les zones d'affinage du procédé de fabrication de verre float, ce qui permettrait de les orienter plus favorablement vers une des surfaces.

## Revendications

1. Assemblage de vitrage simple ou multiple plan, courbe, dont un des composants est plan et l'autre courbe, dont une ou plusieurs feuilles de matière vitreuse ou autre, est déformée géométriquement et de façon élastique lors de son assemblage afin d'améliorer, ou de réduire, la résistance mécanique d'une de ses faces.

2. Vitrage simple ou multiple selon la revendication 1, assemblés suivant un procédé sous vide sur une géométrie de référence, et mis en forme sur une surface de référence déterminée, afin de contrôler son niveau de mise sous contrainte de façon uniforme et avec une charge ou des efforts parfaitement répartis.

3. Vitrage simple ou multiple selon les revendications 1 à 2 dont la mise sous compression ou traction d'une des faces des composants améliore ou péjore la résistance mécanique du composant le plus fragile et influence significativement les performances du système global.

4. Vitrage simple ou multiple selon les revendications 1 à 3 dont la mise en forme se réalise sur un plan de référence à demeure afin de maintenir le complexe réalisé dans la forme souhaitée et au niveau de contrainte le plus bas dans le matériau d'assemblage thermoplastique ou autre.

5. Vitrage simple ou multiple selon les revendications 1 à 4 dont l'épaisseur du composant le plus fragile est plus fine, afin de réduire les contraintes statiques du matériau d'assemblage, et de maintenir la face fragile en compression dans tous les cas de sollicitation. La participation du vitrage sain est ainsi plus importante.

6. Un assemblage de matériau de coefficient de dilatation différente à l'aide d'un complexe élastomère / un matériau de coefficient de dilatation intermédiaire / élastomère. Cet assemblage confère une résistance aux dilatations différentielles supérieures ou inférieures, en réduisant ou augmentant les contraintes transférées aux matériaux d'assemblage et une confère raideur supérieure, pour une même épaisseur globale.

7. Un assemblage multiple suivant les revendications 1 à 6 dont le système de maintien ou de montage privilégie le composant dont les propriétés doivent persister en situation de sacrifice du composant à propriétés péjorées.

8. Un assemblage suivant la revendication 7 dont un des composants est courbe et l'autre plat, réalisé en un ou plusieurs éléments et assemblés ensemble en vitrage multiple plan/courbe.

9. Un assemblage suivant la revendication 5 dont la différence d'épaisseur du composant le plus fin est destinée à limiter ou augmenter sa contrainte sous les conditions définies que ce soit mécanique, thermique ou physique.

10. Un insert support de fond de joint réalisé à l'aide d'un câble tendu entre les 2 extrémités d'un vitrage, qui permet de maintenir un profil d'ancrage et de le mettre sous tension afin de le raidir ou éventuellement de l'arquer.

11. Un support de joint suivant la revendication 10, capable de s'ancrer sur son câble support et par réaction élastique à une face ou un bord de paroi.

12. Un support suivant les revendications 10 à 11 dont la matière permet d'assurer et de consolider les fonctions élastiques et mécaniques requise au joint d'étanchéité.

13. Un vitrage multiple suivant revendication 1 à 12, assemblé sous vide en vitrage isolant et dont les faces de géométrie définies et non parallèles à pression normale, deviennent parallèles lors de la mise sous vide avec un nombre réduit, ou sans, plots de distanciation.

14. Un vitrage simple ou multiple dont une insertion de points de transmission du spectre solaire plus élevées et de diamètre inférieur à 0,8 mm diminue la transmission du spectre solaire totale ou partielle du panneau vitré.

15. Un vitrage suivant revendication 14 dont les points sont insérés dans l'intercalaire du vitrage feuilleté, dans la masse de verre (par des composants à plus haute température de fusion ou de silice introduit en fin d'affinage du float par exemple) déposés éventuellement plus proche de la face destinée à être extérieure, par dépôt de peinture vitrifiable ou pas ou par tout autre principe permettant de rendre cette insertion non identifiable à distance d'observation et réduisant la transmission du spectre solaire globale.

16. Un élément structurel constitué d'une armature éventuellement périphérique totale ou partielle et d'un panneau vitré simple ou multiple solidarisé et constituant une partie de surface susceptible d'être autoportante et constituant d'une enveloppe externe. L'assemblage des différents éléments de superficie entre eux construit une structure autoportante tel un exosquelette rendant superflue les structures portantes internes.
